# EUROPEAN PATENT SPECIFICATION

(11) **EP 1 097 334 B1**
(45) Date of publication and mention of the grant of the patent: **11.02.2004**
(21) Application number: 98934461.9
(22) Date of filing: 15.07.1998
(51) Int. Cl.: F16L 57/00, F16L 7/00, F16L 59/14

(54) **PIPE CAGE**
ROHRKÄFIG
CAGE POUR TUYAUX

(43) Date of publication of application: 09.05.2001
(73) Proprietor: Piorkowski, Michael J., Glen Mills, PA 19342 (US)
(72) Inventor: Piorkowski, Michael J., Glen Mills, PA 19342 (US)
(74) Representative: Vinsome, Rex Martin
(86) International application number: PCT/US1998/014440
(87) International publication number: WO 2000/004319

(56) References cited:
- GB-A- 230 696
- US-A- 1 586 422
- US-A- 1 971 500
- US-A- 2 804 095
- US-A- 2 962 051
- US-A- 3 889 715
- US-A- 4 930 544
- US-A- 5 303 744
- US-A- 5 402 830

## Description

### Technical Field

The instant invention relates generally to hot process piping and process vessels and, more specifically, to protection and isolation of persons from contacting the hot process piping and process vessels..

Protection of persons from contacting hot process pipes is known from US-A-5 402 830 and US-A-1 586 422.

### Disclosure of the Invention

A primary object of the present invention is to provide a pipe cage that will overcome the shortcomings of the prior art devices.

Another object of the present invention is to provide a pipe cage able to protect persons from contact with hot process piping and process vessels.

A further object of the present invention is to provide a pipe cage which will not obstruct exposure of the hot process piping and process vessels to the atmosphere.

A still further object of the present invention is to provide a pipe cage which will allow ambient air to cool the hot process piping and process vessels.

A yet further object of the present invention is to provide a pipe cage which increases the efficiency and production of hot process piping and process vessels.

A still further object of the present invention is to provide a pipe cage which allows easy access for maintenance and inspection of the hot process piping and process vessels.

An additional object of the present invention is to provide a pipe cage which is easily installed.

An even further object of the present invention is to provide a pipe cage which is inexpensive in cost.

Further objects of the invention will appear as the description proceeds.

A pipe cage for protecting persons from a hot process pipe is disclosed by the present invention. The pipe cage includes first and second clips separated by a predetermined distance for engaging the hot process pipe and first and second sets of spacer bars extending from a respective one of the first and second clips. A first ring is connected to surround the first set of spacer bars and a second ring is connected to surround the second set of spacer bars. A plurality of ribs are connected between the first and second rings, wherein the plurality of ribs are spaced from and extend parallel to the hot process pipe preventing contact of the hot process pipe by a person in an area surrounding the pipe while providing ambient air exposure to the hot process pipe.

### Brief Description of the Drawing Figures

Various other objects, features and attendant advantages of the present invention will become more fully appreciated as the same becomes better understood when considered in conjunction with the accompanying drawings, in which like reference characters designate the same or similar parts throughout the several views.

FIGURE 1 is a perspective view of a control station at a processing facility implementing the pipe cage of the present invention around hot process pipes.

FIGURE 2 is a perspective view of the pipe cage of the present invention positioned around a hot process pipe.

FIGURE 3 is a side view of the pipe cage of the present invention positioned around a hot process pipe.

FIGURE 4 is a top view of the pipe cage of the present invention taken in the direction of the arrow 4-4 of Figure 3.

FIGURE 5 is a top perspective view with parts broken away of a portion of the pipe cage of the present invention.

FIGURE 6 is a side cross-sectional view of a portion of the pipe cage of the present invention.

The reference numbers utilized in the drawing figures are defined as follows.
- **10**: processing plant
- **12**: hot process pipe
- **14**: control station
- **16**: worker
- **18**: pipe cage
- **20**: first clip
- **22**: second clip
- **24**: first set of spacer bars
- **26**: second set of spacer bars
- **28**: first ring
- **30**: second ring
- **32**: plurality of ribs
- **34**: first section of clip
- **36**: first end of first section of clip
- **38**: second end of first section of clip
- **40**: receiving section of first end
- **42**: receiving section of second end
- **44**: second section of first clip
- **46**: first end of second section
- **48**: second end of second section
- **50**: protruding nub on first end of second section
- **52**: protruding nub on second end of second section
- **54**: protruding end
- **56**: clamping recess
- **58**: additional rings

### Detailed Description of the Preferred Embodiment

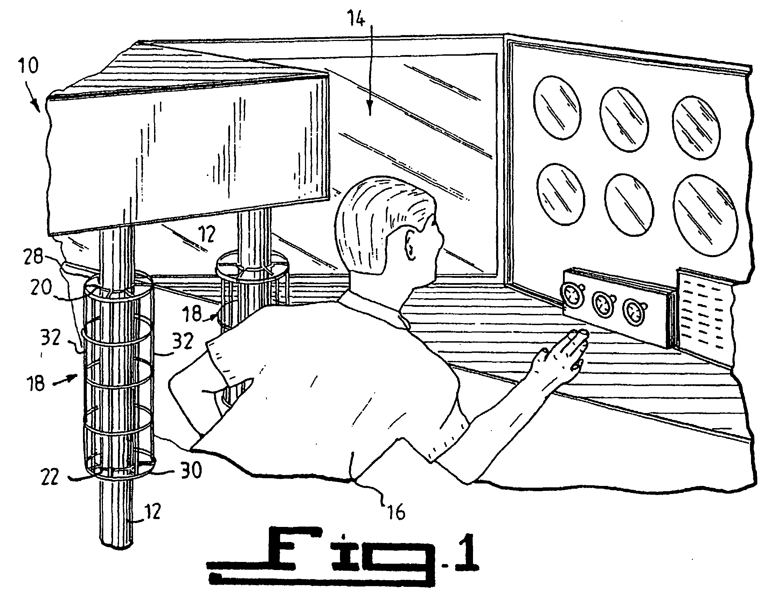

Turning now descriptively to the drawings, in which similar reference characters denote similar elements throughout the several views, the figures illustrate a pipe cage used to surround hot process piping and process vessels. The pipe cage acts to protect persons from contacting the hot pipes without inhibiting the ambient air from naturally cooling the hot pipes. A processing plant implementing the pipe cage of the present invention is illustrated in Figure 1 and indicated generally by the numeral **10**.

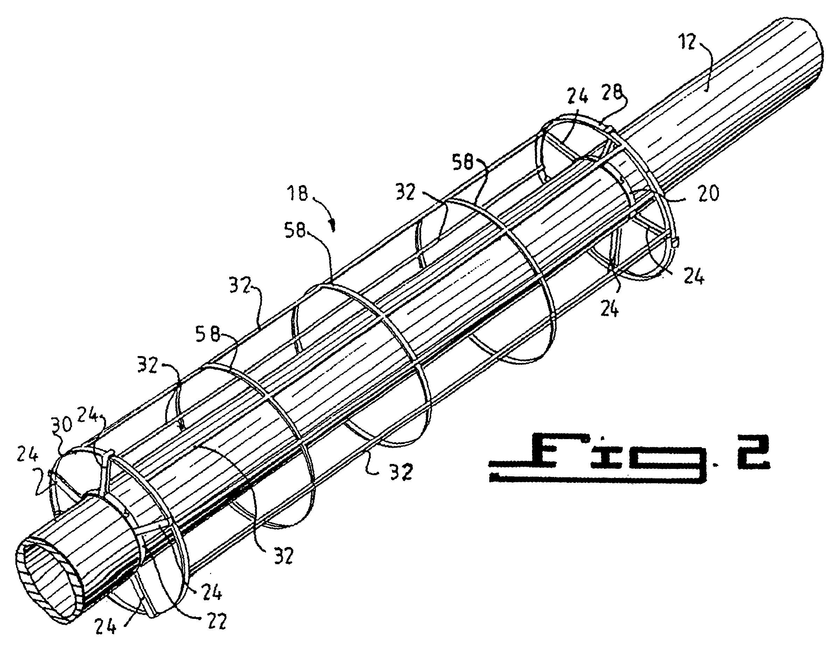

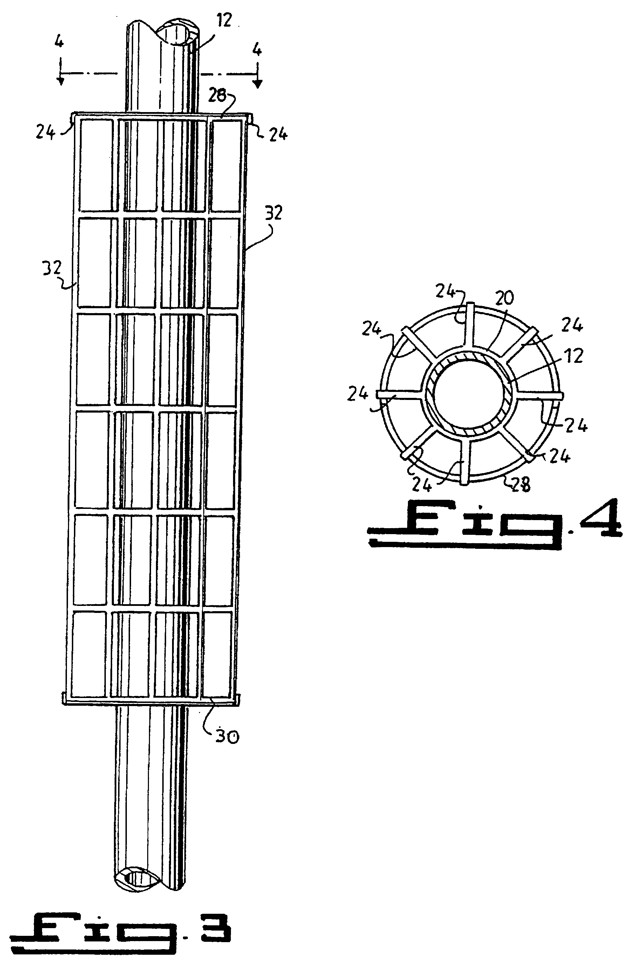

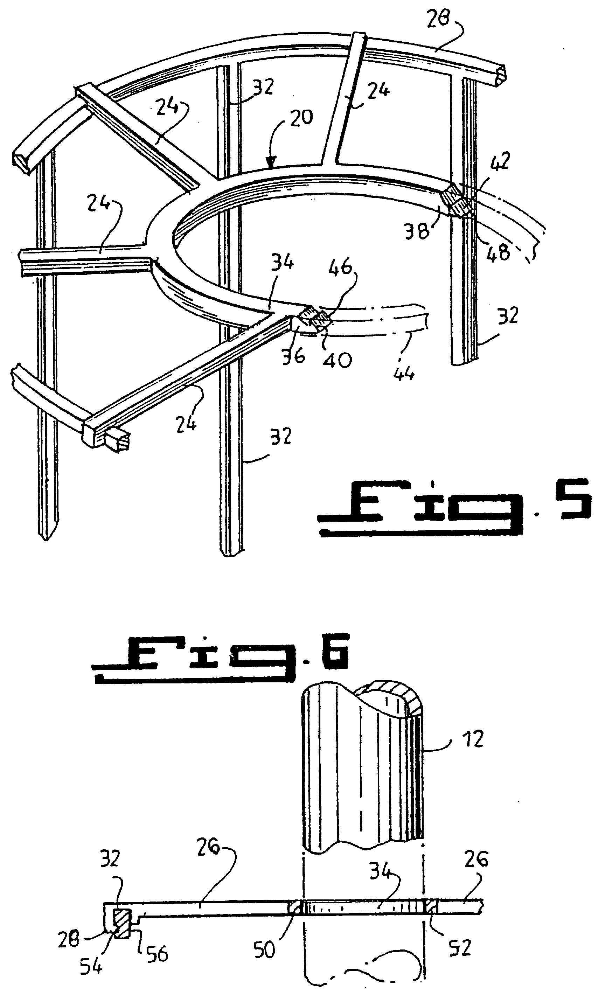

The processing plant **10** includes a plurality of pipes **12** positioned in a control station or work area **14** thereof. The processing plant **10** may be a chemical plant, a manufacturing facility, a refinery or any other processing plant using hot processing pipes which run throughout occupied work areas where employees or other personnel **16** are present. Each pipe cage **18** of the present invention is positioned around a respective one of the pipes **12**. The pipe cage **18** of the present invention is more clearly illustrated in Figures 2 - 6.

Each pipe cage **18** includes a first clip **20** and a second clip **22** which engage the hot process pipe **12**. A first set of spacer bars **24** are connected at a first side thereof to extend from the first clip **20** and a second set of spacer bars **26** are connected at a first side thereof to extend from the second clip **22**. Adjacent bars of each of the first and second sets of spacer bars 24 and 26 are preferably separated by forty-five (45) degrees about the circumference of their respective ring. Therefore, optimally there will be eight (8) spacer bars extending from each of the first and second clips **20** and **22** although any number of spacer bars may be connected to extend from each clip **20** and **22**.

The first and second clips **20** and **22** may be made of any material which will prevent heat transfer from the pipe **12** to the cage **18**. For lower temperature applications, the cage will preferably be made of a fiberglass ring or pad mounted to the surface of the pipe and having a thin gage metal cage fastened to the fiberglass ring or pad. The fiberglass ring or pad may be replaced by any other material which is able to perform the same function and the thin gage metal may be formed of galvanized steel, aluminum, any alloy thereof or any other metal which has the same or similar properties. For higher temperature applications, the clip will be made of steel mounted to the surface of the pipe **12** and having a ceramic material fastened thereto. The pipe cage **18** will then be fastened to the ceramic spacer layer.

A first ring **28** is connected to a second end of the first set of spacer bars **24** and a second ring **30** is connected to a second end of the second set of spacer bars **26**. The first and second clips **20** and **22** each have a circumference equal to the circumference of the outer wall of the pipe **12** which they extend around. The circumference of the first ring **28** is equal to the circumference of the second ring **30**, the circumference of the first and second rings **28** and **30** being greater than the circumference of the first and second clips **20** and **22**.

Extending between the first and second rings **28** and **30** are a plurality of ribs **32** which extend parallel to the pipe **12**. Optimally, adjacent ones of the plurality of ribs **32** will be separated by an approximately or substantially forty-five (45) degree arc along the radius of the first and second rings **28** and **30** and thus there will be eight ribs positioned about the cage. However, any number of ribs may be connected around the first and second rings and separated by any desired distance. The distance of separation between adjacent ribs need not be uniform about the circumference of the first and second rings **28** and **30**. Thus accommodating any position of the pipes and providing added protection to areas of pipe having a greater likelihood of contact by a person in the area surrounding the pipe. The first and second rings **28** and **30** act to separate the plurality of parallel ribs **32** from the hot process pipe **12** and thereby shield the pipe **12** from contact by persons in the area while allowing the ambient air to naturally cool the pipe **12**. Additional rings **58** may be connected to the plurality of the ribs **32** and positioned between the first and second rings **28** and **30** for adding further support to the plurality of ribs **32** and increasing the length of the pipe cage **18**.

Figure **5** illustrates a first section of the pipe cage **18**. The first clip **20** includes first and second sections **34** and **44** which clip together for placement around the pipe **12**. The first section **34** includes first and second ends **36** and **38**, each including a receiving section **40** and **42**. The second section **44** is shown in outline in Figure **5** and includes first and second ends **46** and **48**. The first and second ends **46** and **48** each include a protruding nub **50** and **52**. The protruding nubs **50** and **52** are secured within a respective one of the receiving sections **40** and **42** to thereby connect the first and second sections **34** and **44**.

Figure 6 illustrates the connection between the first ring **26** and the parallel ribs **32**. The first ring **26** includes a plurality of protruding clips **54** and each parallel rib **32** includes a recess **56** at either end thereof. The recess **56** on each of the plurality of ribs **32** are sized for receipt of a respective one of the protruding clips **54** on the first ring **26** to secure the ribs within the first ring **28**. The protruding clips 54 are positioned about the periphery of the first ring 28 at points at which it is desired to connect with a rib **32**. The second ring **30** includes corresponding protruding clips for connecting to the opposing side of the plurality of ribs **32**.

It is to be understood that the pipe cage for protecting persons in proximity to a hot process pipe from contacting the pipe while allowing the ambient air to contact and cool the pipe in accordance with the present invention may be formed of any suitable material such as steel, iron, any alloy thereof, any alloy of a light weight casted metal or molded material, wood, plastic, or any combination of materials and the like and that the invention is not intended to be limited by the materials from which the pipe cage is formed.

The pipe cage of the present invention is also useful for placement around hot process vessels and tank bottoms, acting to protect persons in the vicinity while maintaining exposure to the surrounding environment.

Based on the above, it is evident that the present invention is to provide a pipe cage that will overcome the shortcomings of the prior art devices which protects persons from contact with hot process piping and process vessels while maintaining exposure of the hot process piping and process vessels to the atmosphere. The present invention also allows ambient air to cool the hot process piping and process vessels which increases the efficiency and production of hot process piping and process vessels. The pipe cage of the present invention allows easy access for maintenance on the hot process piping and process vessels and is easily installed. Furthermore, the present invention is inexpensive in cost and easy to manufacture.

## Claims

1. A pipe cage (18) for protecting persons from a hot process pipe, said pipe cage comprising:
a) first and second clips (20, 22) each engaging the hot process pipe (12), said first and second clips (20, 22) being separated by a predetermined distance along a length of the hot process pipe (12);
b) first and second sets of spacer bars (24, 26), each spacer bar of both said first and second sets having first and second ends and being connected at said first end to extend from a respective one of said first and second clips (20, 22);
c) a first ring (28) connected to the second side of each bar of said first set of bars (24);
d) a second ring (30) connected to said second side of each bar of said second set of bars (26); and
e) a plurality of ribs (32) each having a length equal to said predetermined separation distance and connected between said first and second rings (28, 30), wherein said plurality of ribs (32) are spaced from and extend parallel to the hot process pipe (12) preventing contact of the hot process pipe by a person in an area surrounding the pipe while providing ambient air exposure to the hot process pipe.

2. A pipe cage as recited in Claim 1, wherein both said first and second clips include first and second sections, said first section of both said first and second clips include first and second ends each having a clamping recesses and said second section of both said first and second clips include first and second ends including nubs for receipt by said first and second clamping recesses.

3. A pipe cage as recited in Claim 1, wherein both said first and second clips include first and second sections, said first section of both said first and second clips include a first end having a clamping recess and said second section of both said first and second clips include a first end including a nub for receipt by said first and second clamping recesses, said first and second sections of both said first and second clips each including a second end and being pivotally connected at said second ends.

4. A pipe cage as recited in Claim 1, wherein said first and second rings each include a plurality of clamping recesses and said plurality of ribs each include first and second protruding ends, each of said first and second protruding ends including a nub for receipt by a respective clamping recess in said first and second rings.

5. A pipe cage as recited in Claim 1, wherein said first and second rings each have a circumference and adjacent ones of said plurality of ribs are separated by a substantially 45 degree arc about said circumference of said first and second rings.

6. A pipe cage as recited in Claim 1, wherein said first and second clips include a fiberglass ring and a metal ring fastened therearound.

7. A pipe cage as recited in Claim 6, wherein said metal is one of galvanized steel, aluminum, iron, any alloy thereof and any combination thereof.

8. A pipe cage as recited in Claim 1, wherein said first and second clips include a steel ring and a ceramic spacer layer fastened therearound.

9. A pipe cage as recited in Claim 1, further comprising a plurality of intermediate rings positioned between said first and second rings and connected to said plurality of ribs.

10. A pipe cage as recited in Claim 1, wherein said first and second sets of spacer bars and said plurality of ribs are made of a low conductive material.

11. A pipe cage as recited in Claim 1, wherein said first and second sets of spacer bars and said plurality of ribs are made of any one of steel, iron, any alloy thereof, any alloy of a light weight casted metal or molded material, wood, plastic, and any combination of materials.

## Patentansprüche

1. Rohrkäfig (18) zum Schutz von Personen vor heißen Prozessrohren, wobei der Rohrkäfig umfasst:
a) erste und zweite Halteschellen (20, 22), die jeweils das heiße Prozessrohr (12) umschließen, wobei die erste und zweite Halteschelle (20, 22) durch einen vorbestimmten Abstand entlang der Länge des heißen Prozessrohres (12) getrennt sind;
b) einen ersten und zweiten Satz Abstandsstäbe (24, 26), wobei jeder Abstandsstab (24, 26) des ersten und zweiten Satzes ein erstes und zweites Ende hat und am ersten Ende verbunden ist, um sich von der jeweiligen ersten und zweiten Halteschelle (20,22) zu erstrecken;
c) einen ersten Ring (28), der mit der zweiten Seite jedes Stabes des ersten Satzes an Stäben (24) verbunden ist;
d) einen zweiten Ring (30), der mit der zweiten Seite jedes Stabes des zweiten Satzes von Stäben (26) verbunden ist; und
e) eine Vielzahl von Rippen (32), wobei jede eine Länge gleich dem vorbestimmten Abstand hat und mit dem ersten und zweiten Ring (28, 30) verbunden ist, wobei die Vielzahl an Rippen (32) einen Abstand vom heißen Prozessrohr (12) aufweist und sich parallel dazu erstreckt und eine Berührung des heißen Prozessrohres (12) durch eine Person in einem Bereich um das Rohr herum verhindert während die Einwirkung von Umgebungsluft auf das heiße Prozessrohr (12) ermöglicht wird.

2. Rohrkäfig gemäß Anspruch 1, wobei die erste und zweite Halteschelle (20, 22) erste und zweite Abschnitte (34, 44) umfassen, wobei der erste Abschnitt (34) der ersten und zweiten Halteschelle erste und zweite Enden (36, 38) umfasst, die jeweils Klemmaussparungen umfassen und wobei der zweite Abschnitt (44) der ersten und zweiten Halteschelle erste und zweite Enden (46, 48) einschließt, die Noppen zur Aufnahme durch die erste und zweite Klemmaussparung umfassen.

3. Rohrkäfig nach Anspruch 1, wobei die erste und zweite Halteschelle (20, 22) erste und zweite Abschnitte (34,44) umfassen, wobei der erste Abschnitt (34) der ersten und zweiten Halteschelle (20, 22) ein erstes Ende (36) umfasst., welches eine Klemmaussparung umfasst und der zweite Abschnitt (44) der ersten und zweiten Halteschellen ein erstes Ende (46) umfasst, welches eine Noppe zur Aufnahme durch die erste und zweite Klemmaussparung umfasst, wobei der erste und zweite Abschnitt (34, 44) der ersten und zweiten Halteschelle (20, 22) jeweils ein zweites Ende (38, 48) umfasst und zentral am zweiten Enden verbunden ist,

4. Rohrkäfig nach Anspruch 1, wobei der erste und zweite Ring (28, 30) jeweils eine Vielzahl von Klemmaussparungen (56) umfasst und die Vielzahl der Rippen (32) jeweils erste und zweite vorstehende Enden umfasst, wobei jedes der ersten und zweiten vorstehenden Enden eine Noppe zur Aufnahme durch eine entsprechende Klemmaussparung im ersten und zweiten Ring (28, 30) umfasst.

5. , Rohrkäfig nach Anspruch 1, wobei der erste und zweite Ring (28, 30) jeweils einen Umfang haben und Benachbarte der Vielzahl der Rippen (32) durch einen im Wesentlichen 45°-Winkel gegen den Umfang des ersten und zweiten Ringes (28, 30) getrennt sind.

6. Rohrkäfig nach Anspruch 1, wobei die erste und zweite Halteschelle (20, 22) einen Fiberglasring und einen darum befestigten Metallring umfassen.

7. Rohrkäfig nach Anspruch 6, wobei das Metall aus galvanisiertem Stahl, Aluminium, Eisen, jeglichen Legierungen davon und jeglicher Kombination davon ausgewählt ist.

8. Rohrkäfig nach Anspruch 1, wobei die erste und zweite Halteschelle einen Stahlring und eine darum befestigte Keramikabstandsschicht umfasst.

9. Rohrkäfig nach Anspruch 1, der weiterhin eine Vielzahl von Zwischenringen (58) umfasst, die zwischen dem ersten und zweiten Ring (28, 30) angeordnet sind und mit der Vielzahl der Rippen (32) verbunden sind.

10. Rohrkäfig nach Anspruch 1, wobei der erste und zweite Satz Abstandsstäbe (24, 26) und die Vielzahl der Rippen (32) aus einem gering leitenden Material gefertigt sind.

11. Rohrkäfig nach Anspruch 1, wobei der erste und zweite Satz Abstandsstäbe (24, 26) und die Vielzahl der Rippen (32) aus Stahl, Eisen, irgendeiner Legierung davon, irgendeiner Legierung eines gegossenen Leichtmetalls oder geformten Materials, Holz, Kunststoff, oder irgendeiner Kombination an Materialien gefertigt sind.

## Revendications

1. Cage (18) pour tuyaux destinée à protéger les personnes de tout contact avec une conduite chaude, la cage pour tuyaux comprenant :
a) des première et seconde attaches (20, 22) venant chacune en prise avec la conduite chaude (12), les première et seconde attaches (20, 22) étant séparées par une distance prédéterminée sur une longueur de la conduite chaude (12) :
b) des première et seconde séries de barres d'espacement (24, 26), chaque barre d'espacement des première et seconde séries possédant des premières et deuxièmes extrémités et étant reliée, au niveau de la première extrémité, pour s'étendre à partir de l'une des première et seconde attaches (20, 22) ;
c) un premier anneau (28) relié au second côté de chaque barre de la première série de barres (24) ;
d) un deuxième anneau (30) relié au second côté de chaque barre de la seconde série de barres ; et
e) une pluralité de renforts (32) présentant chacun une longueur égale à la distance de séparation prédéterminée et montés entre les premier et second anneaux (28, 30), la pluralité de renforts (32) étant espacés de la conduite chaude (12) et s'étendant parallèlement à celle-ci pour empêcher tout contact entre la conduite chaude et une personne se trouvant dans une zone entourant la conduite, tout en permettant l'exposition de la conduite chaude à l'air ambiant.

2. Cage pour tuyaux selon la revendication 1, dans laquelle les première et seconde attaches comprennent des première et seconde sections, la première section des première et seconde attaches comprenant des première et seconde extrémités présentant chacune un creux de fixation et la deuxième section des première et seconde attaches comprenant des première et seconde extrémités présentant des protubérances destinées à être reçues par les premier et second creux de fixation.

3. Cage pour tuyaux selon la revendication 1, dans laquelle les première et seconde attaches comprennent des première et seconde sections, la première section des première et seconde attaches comprenant une première extrémité présentant un creux de fixation et la deuxième section des première et seconde attaches comprenant une première extrémité présentant une protubérance destinée à être reçue par les premier et second creux de fixation, les première et seconde sections des première et seconde attaches comprenant, chacune, une deuxième extrémité et étant reliée de façon pivotante au niveau des deuxièmes extrémités.

4. Cage pour tuyaux selon la revendication 1, dans laquelle les premier et second anneaux comprennent, chacun, une pluralité de creux de fixation et ladite pluralité de renforts comprennent, chacun, des première et seconde extrémités en saillie, chacune des première et seconde extrémités en saillie présentant une protubérance destinée à être reçue par un creux de fixation respectif prévu dans le premier et le deuxième anneaux.

5. Cage pour tuyaux selon la revendication 1, dans laquelle les premier et second anneaux possèdent chacun une circonférence et les renforts adjacents de la pluralité de renforts sont séparés par un arc de sensiblement 45 degrés autour de la circonférence des premier et second anneaux.

6. Cage pour tuyaux selon la revendication 1, dans laquelle les première et seconde attaches comprennent une bague en fibre de verre et une bague métallique fixée autour.

7. Cage pour tuyaux selon la revendication 6, dans laquelle le métal est choisi parmi l'acier galvanisé, l'aluminium, le fer, tout alliage de ces métaux et toute combinaison de ceux-ci.

8. Cage pour tuyaux selon la revendication 1, dans laquelle les première et seconde attaches comprennent une bague en acier et une couche d'espacement en céramique fixée autour.

9. Cage pour tuyaux selon la revendication 1, comprenant, en outre, une pluralité de bagues intermédiaires positionnées entre les premier et second anneaux et reliées à la pluralité de renforts.

10. Cage pour tuyaux selon la revendication 1, dans laquelle les première et seconde séries de barres d'espacement et la pluralité de renforts sont constitués dans un matériau faiblement conducteur.

11. Cage pour tuyaux selon la revendication 1, dans laquelle les première et seconde séries de barres d'espacement et la pluralité de renforts sont constitués dans un matériau choisi parmi l'acier, le fer, tout alliage de ce dernier, tout alliage d'un métal léger coulé ou dans un matériau moulé, du bois, de la matière plastique, ou toute combinaison de ces matériaux.
